Europäisches Patentamt

European Patent Office

Office européen des brevets

(19)

(11) Veröffentlichungsnummer: **0 194 576**
**A2**

(12) ## EUROPÄISCHE PATENTANMELDUNG

(21) Anmeldenummer: **86102923.9**

(22) Anmeldetag: **05.03.86**

(51) Int. Cl.⁴: **A 23 N 12/10**

(30) Priorität: **09.03.85 DE 3508424**
**29.03.85 DE 3511518**

(43) Veröffentlichungstag der Anmeldung:
**17.09.86 Patentblatt 86/38**

(84) Benannte Vertragsstaaten:
**AT BE CH DE FR GB IT LI LU NL SE**

(71) Anmelder: **TCHIBO-Frisch-Röst-Kaffee AG**
**Überseering 18**
**D-2000 Hamburg 60(DE)**

(72) Erfinder: **Dreyer, Jürgen, Dipl.-Ing.**
**Achter die Hoef 160**
**D-2000 Hamburg 56(DE)**

(72) Erfinder: **Schmidt, Wilfried, Dipl.-Ing.**
**Birkenweg 25**
**D-2082 Tornesch(DE)**

(74) Vertreter: **UEXKÜLL & STOLBERG Patentanwälte**
**Beselerstrasse 4**
**D-2000 Hamburg 52(DE)**

(54) **Vorrichtung zum kontinuierlichen Rösten von Kaffee.**

(57) Die Erfindung betrifft eine Vorrichtung zum kontinuierlichen Rösten von Kaffee in einer sich um ihre Längsachse drehenden Rösttrommel mit nebeneinander angeordneten nach oben offenen Ringkammern, die durch mit Abstand zueinander angeordnete Kammerwände begrenzt sind, einem coaxial in der Rösttrommel verlaufenden Röstgas zuführenden Hauptrohr mit Röstgasdüsenrohren zur Erzeugung eines Wirbelbettes aus den zu röstenden Kaffeebohnen, die dadurch gekennzeichnet ist, daß zwischen den Ringkammerwänden (12, 12') in die Ringkammer (10, 10') hineinreichende Begrenzungselemente (14, 14') als seitliche Begrenzung des von dem jeweiligen Satz von Röstgasdüsenrohren (8) erzeugten Wirbelbettes vorgesehen sind, die an dem Röstgas zuführenden Hauptrohr (6) befestigt sind;

Fig.1

EP 0 194 576 A2

Die Erfindung betrifft eine Vorrichtung zum kontinuierlichen Rösten von Kaffee gemäß Oberbegriff des Hauptanspruchs.

Derartige Röstanlagen werden in der Kaffee verarbeitenden Industrie eingesetzt, insbesondere um eine schnellere Röstung der einzelnen Kaffeebohnen bei gleichzeitiger Volumenvergrößerung der Einzelbohnen und der dadurch bedingten quantitativ und qualitativ besseren Auslaugung der Extrakt- und Aromastoffe auf kontinuierliche Weise zu ermöglichen.

Derartige Vorrichtungen bestehen im allgemeinen aus einer sich um die Längsachse drehenden etwa 5 m langen Rösttrommel mit einem Durchmesser von etwa 1,8 m, in welcher etwa 15 bis 25 nebeneinander angeordnete und nach oben offene Ringkammern mit einer Basisbreite von 25 bis 30 cm vorgesehen sind. Diese Ringkammern sind nach oben offen und werden einmal durch die Innenwand der Drehtrommel und zum anderen durch die in Radialebene mit Abstand zueinander angeordneten Kammerwände, die etwa 20 cm hoch sind, begrenzt.

In der Rösttrommel befindet sich ein axial verlaufendes Röstgas zuführendes Hauptrohr mit einem Außendurchmesser von etwa 70 cm, von welchem zu einem Düsenstock zusammengefaßte Röstgasdüsenrohre in radialer Richtung in den unteren Bereich der jeweiligen Ringkammer hineinreichen. Diese Röstgasdüsenrohre sind beispielsweise in Reihen von 4 Rohre mit 14 in Trommeldrehrichtung angeordneten Düsenrohren ausgestattet und können je nach Auslegung variable Düsenquerschnitte beispielsweise im Bereich von 0,01 bis 0,022 $m^2$ aufweisen. Diese etwa 20 bis 50 cm langen in die Ringkammer hineintauchenden Düsenrohre bewirken die Erzeugung eines Wirbelbettes aus den zu röstenden Kaffeebohnen im unteren Bereich der oben offenen

0194576

Ringkammer. Die Röstgasdüsenrohre innerhalb eines Düsenstockes können in radialer bis nahezu tangentialer Richtung ausgerichtet sein.

Rohkaffee wird an dem einen Ende der Rösttrommel aufgegeben und gelangt in die erste Ringkammer, von wo er mittels zwischen den einzelnen Ringkammern angeordneten Übergangsbereichen oder Vertiefungen mit Leitblechen zum Weitertransport nach einer Drehung in die nächste Ringkammer und von dieser über die verschiedenen beispielsweise bis zu 20 nebeneinander angeordneten Ringkammern in eine Austragestation gelangt, vor welcher auch noch eine Abkühlstation beispielsweise mit in die letzten Ringkammern hineinreichenden Wasserdüsen vorgesehen sein kann. Von dieser Austragestation der Rösttrommel gelangt dann der Kaffee in eine Luftkühlstation und von dieser anschließend zur Sortier- und Verpackungsstation.

Bei der Kurzzeitröstung mit derartigen bekannten Vorrichtungen, in denen die einzelnen Kaffeebohnen nur eine Verweilzeit von etwa 2 bis 4 Minuten haben, innerhalb welcher die grüne Kaffeebohne erst getrocknet und dann nachher geröstet wird, erhält man als Endprodukt einen Röstkaffee, dessen einzelne Bohnen farblich voneinander abweichen und nicht gleichmäßig durchgeröstet sind. Darüberhinaus ergeben sich erhebliche Röstverluste von ganzen Bohnen, was darauf beruht, daß während des Röstprozesses durch das Absaugen der heißen Röstluft Bohnen entfernt werden. Diese Unregelmäßigkeiten lassen sich weder durch gleichmäßige Kontrolle der Temperatur und des Volumens des Röstgases noch durch Änderungen in der Umdrehungsgeschwindigkeit der Rösttrommel beheben.

Die Erfindung hat sich die Aufgabe gestellt, eine Vorrichtung zu entwickeln mit der man die Gleichmäßigkeit der Röstung und damit die Einheitlichkeit der Farbbeschaffenheit des Röstkaffees und Gleichmäßigkeit der Durchröstung der einzelnen Bohnen verbessern kann bei gleichzeitiger Verringerung der Verluste von ganzen Kaffeebohnen, die während des Röstprozesses durch Absaugen der heißen Röstluft verlorengehen, wobei ferner auch eine größere Genauigkeit und Gleichmäßigkeit des Feuchtigkeitsgehaltes der Kaffeebohnen, und zwar unabhängig von dem Feuchtigkeitsgehalt des aufgegebenen Rohkaffees, erzielt werden soll.

Zur Lösung dieser Aufgabe wird eine Vorrichtung zum kontinuierlichen Rösten von Kaffee vorgeschlagen wie sie gemäß Kennzeichen des Hauptanspruchs ausgebildet ist, wobei weitere Verbesserungen in den Unteransprüchen aufgeführt sind.

Überraschenderweise hat sich durch aufwendige Beobachtungen des Verhaltens der einzelnen Kaffeebohnen in den Ringkammern bzw. innerhalb des Wirbelbettes gezeigt, daß das Kaffeewirbelbett in den Ringkammern unter Einfluß der Drehrichtung der Trommel und der über die Düsen eingeblasenen Heißluft in Abhängigkeit von dem sich ändernden spezifischen Gewicht und des sich ebenfalls ändernden Volumens während des Röstvorganges im Düsenbereich hin- und herschwappt und schwingt, wodurch einzelne Kaffeebohnen aus dem Wirbelbett herausgeschleudert werden und je nach spezifischem Gewicht entweder mit der Heißluft aus der Röstkammer ausgetragen werden oder in eine der vorhergehenden oder in eine der nachfolgenden Kammern gelangen, was dazu führt, daß die Kaffeebohnen aufgrund ihrer längeren oder unerwünscht kürzeren Verweilzeit in der jeweiligen Ringkammer zu stark oder zu wenig geröstet werden und somit die Gleichmäßigkeit der Farbe bzw. der sich durch diese anzeigenden Durchröstung beeinträchtigen.

Überraschenderweise hat sich gezeigt, daß man derartige Ungleichmäßigkeiten verhindern kann, wenn an der auf- und ablaufenden Trommelseite für die Ausbreitung des Wirbelbettes Begrenzungen vorgesehen werden.

Diese mit der erfindungsgemäßen Ausbildung der Begrenzungselemente erzielte "Zusammenfassung" des Wirbelbettes verhindert einmal einen Verlust an Bohnen durch die eingeblasene
Heizluft und bewirkt zum anderen eine gleichmäßigere Ausbildung des Wirbelbettes; ferner wird insbesondere eine Ausbildung von schmalen Lippen des Wirbelbettes verhindert, die
bislang mit der wärmeabgebenden Trommelwand in Kontakt standen
und eine zusätzliche oder stärkere Röstung der einzelnen
Bohnen bewirkten. Die Begrenzung des Wirbelbettes kann auch in
den letzten Ringkammern, in denen eine Kühlung erfolgt, mit
Vorteil beibehalten werden.

Die bevorzugte Ausführung gemäß Erfindung, bei der die
Begrenzungselemente in Form von zwei Einzelplatten ausgebildet
sind, die durch ein Federelement an die Ringkammerwand gepreßt
werden, bringt den Vorteil, daß sich die einzelnen Begrenzungselemente seitlich dicht an die Kammerwände und auch dicht
an die Trommelwand anlegen und federnd Ungenauigkeiten aufgrund einer Wärmedehnung und auch solche aufgrund von Fertigungsungenauigkeiten ausgleichen, um die Lage des Kaffeewirbelbettes genau zu definieren. Durch unterschiedliche Abstände
zwischen den Begrenzungselementen verschiedener Ringkammern
und/oder durch parallel zu den Ringkammerwänden liegende
weitere Begrenzungsplatten, die mit den Begrenzungselementen
verbunden sind, kann die Ausdehnung der jeweiligedn Wirbelbetten dem sich ändernden Volumen der Kaffeebohnen von Beginn der
Trocknung bis zur Endröstung angepaßt werden.

Um ein seitliches Entweichen der Röstluft zu vermeiden, ist es
ferner zweckmäßig, die Begrenzungselemente oder deren Einzelplatten als Lochblech oder Sieb auszuführen, wobei die Größe
der Durchtrittsöffnungen des Lochbleches oder Siebes erheblich
kleiner sein müssen als der geringste Durchmesser einer
einzelnen Kaffeebohne.

Bei diesen starren oder beweglichen Begrenzungselementen
können manchmal Schwierigkeiten bei der Abdichtung zu den
Kammerwänden und zum Trommelmantel auftreten, die durch
Fertigungsgenauigkeiten und Wärmedehnung bedingt sind.
Dieses kann dazu führen, daß sich Kaffeebohnen in den
technisch notwendigen Luftspalten festklemmen und verkohlen, wodurch Störungen in der Röstanlage und Verluste von
Kaffee zu erwarten sind.

Um eine dichte Begrenzung des Wirbelbettes trotz auftretender Ungleichmäßigkeiten in den Kammerwänden und am Trommelmantel zu ermöglichen, werden die Begrenzungselemente als
Ketten oder Kettenvorhang, z.B. Kettengewebe ausgeführt und
können an den Kammerwänden und an der Trommel dicht
anliegen und dort schleifend abdichten. Der Kettenvorhang
gleicht Ungenauigkeiten der Fertigung und der Trommel aus,
verhindert jedoch durch sein eigenes Gewicht ein Ausbreiten
des Wirbelbettes über die Begrenzung hinaus.

Bei einer bevorzugten Ausführungsform sind hinter dem
Kettenvorhang jeweils an der dem Wirbelbett abgewandten
Seite mehrere Stabilisierungsstäbe senkrecht angebracht,
wodurch in dieser Richtung ein Ausweichen des Kettenvorhanges verhindert wird. In Richtung des Kaffeebettes kann
der Kettenvorhang jedoch auslenken, so daß Kaffee, der
nicht bestimmungsgemäß außerhalb dieser Begrenzungselemente und außerhalb des Wirbelbettes liegt, in den Wirbelraum
zurückfallen kann. Bei dieser Ausführung arbeitet das
Begrenzungselement wie eine Rückschlagkappe.

Bei der erfindungsgemäßen Ausführung der Begrenzungselemente
ist ein Festkeilen in den Kammern der Trommel nicht zu
erwarten. Sollten aus Verschleißgründen oder wegen Materialermüdung Kettenglieder oder ein Kettenvorhang
abreißen, so kann er bei der vorgesehenen Ausführung aus
wärmebeständigem Stahl leicht durch Elektromagnete, die
den Kaffeestrom absuchen, aufgefangen werden, so daß
ausgeschlossen ist, daß magnetische Eisenteile in die
Mühlen oder die Endverpackung gelangen.

Im folgenden soll die Erfindung anhand von Zeichnungen näher erläutert werden; es zeigen:

Figur 1:   eine perspektivische und teilweise geschnittene Darstellung durch einen Teil der Rösttrommel mit starren Begrenzungselementen;

Figur 1a): eine Darstellung analog Figur 1, jedoch mit einem aus Ketten bestehenden Begrenzungselement;

Figur 1b): eine Darstellung analog Figur 1a), jedoch mit Stabilisierungsstäben im Kettenvorhang;

Figur 2    eine Seitenansicht eines starren Begrenzungselementes;

Figur 2a): eine Seitenansicht eines als Kettenvorhang ausgebildeten Begrenzungselementes;

Figur 2b): eine Darstellung analog Figur 2a, jedoch mit Stabilisierungsstäben im Kettenvorhang;

Figur 3:   eine Draufsicht auf ein aus zwei Einzelplatten bestehendes Begrenzungselement innerhalb einer in Figur 1 gezeigten Ringkammer;

Figur 3a:  eine Teilansicht des Begrenzungselementes gemäß Figur 2a;

Figur 3b:  einen waagerechten Schnitt durch das Begrenzungselement von Figur 2b.

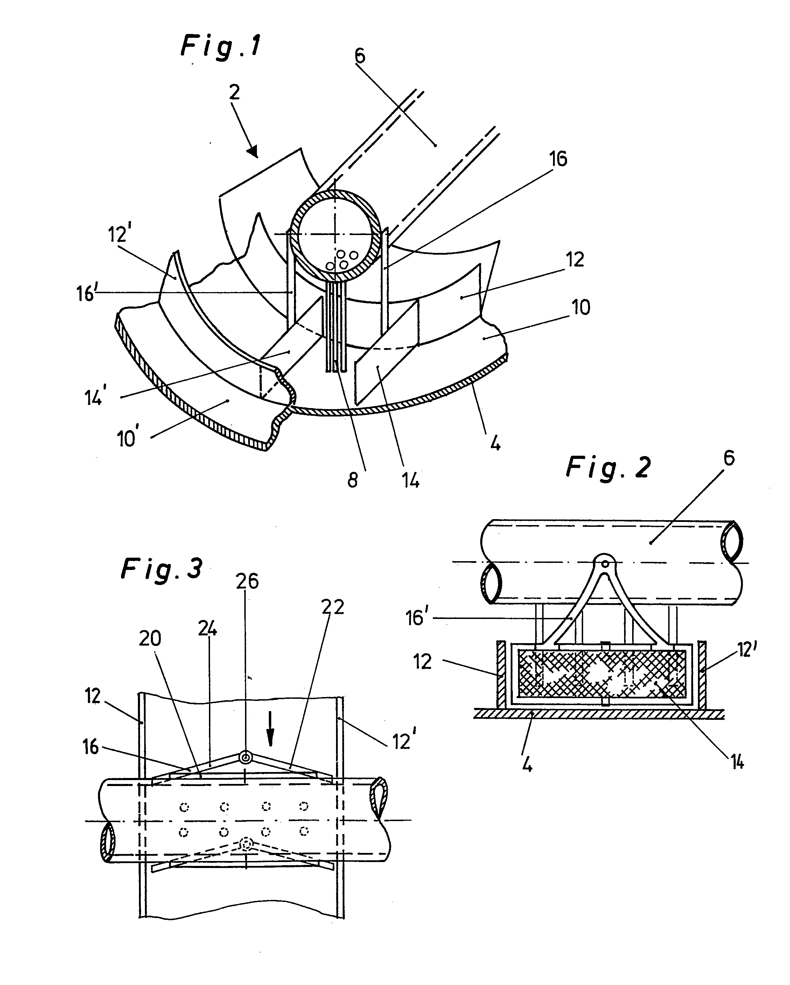

Die allgemein in Figur 1 in teilweise geschnittener Darstellung gezeigte Rösttrommel 2 besteht aus einer umlaufenden Trommelwand 4 und einem in der Rösttrommel 2 axial in der Mitte angeordneten Hauptrohr 6, aus welchem das Röstgas über zu einem Düsenstock 8 zusammengefaßte Röstgasdüsenrohre austritt. Dieser Düsenstock bzw. diese Düsenrohre reichen in eine Ringkammer 10 bzw. 10' hinein, die einerseits durch die Trommelwand 4 und zum anderen durch Ringkammerwände 12, 12' begrenzt wird. In dieser Ringkammer wird der unterhalb der Austrittsöffnungen der Düsenrohre befindliche Kaffee als Wirbelbett aufgewirbelt und gleichzeitig geröstet.

Zur Eindämmung des Wirbelbettes sind innerhalb der Ringkammer 10 Begrenzungselemente 14 bzw,. 14' vorgesehen, die aus die Ringkammer ausfüllenden Sperrplatten oder Blechen bestehen, die über eine Halterung 16 bzw. 16' in ihrer Lage gehalten werden.

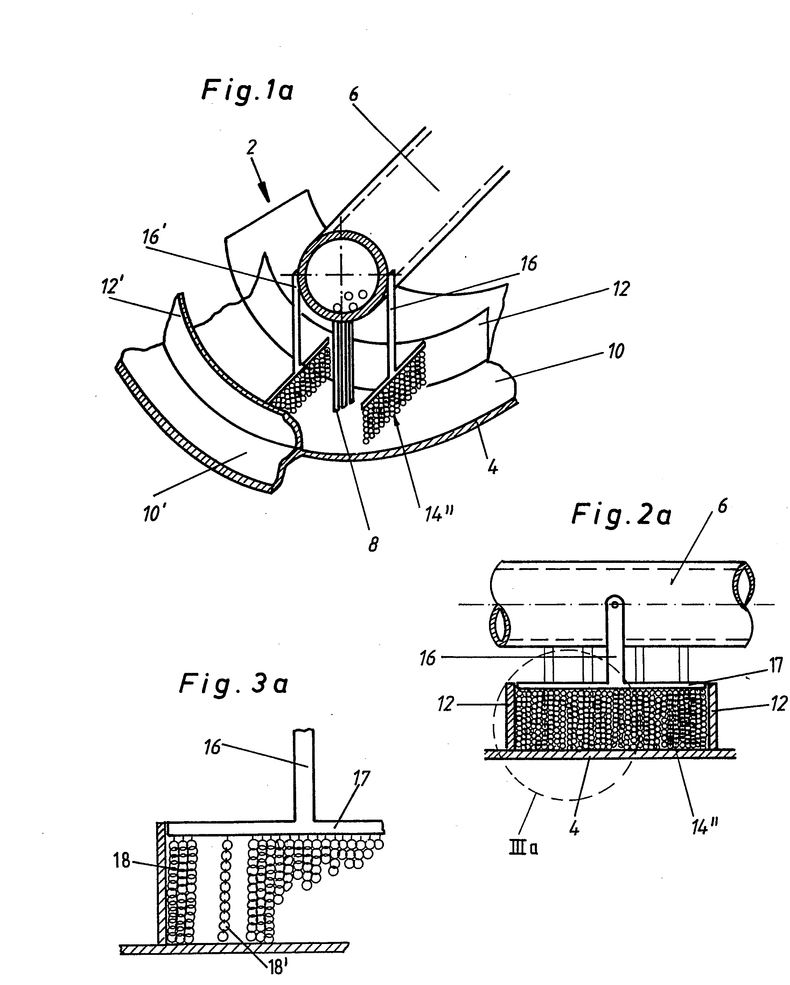

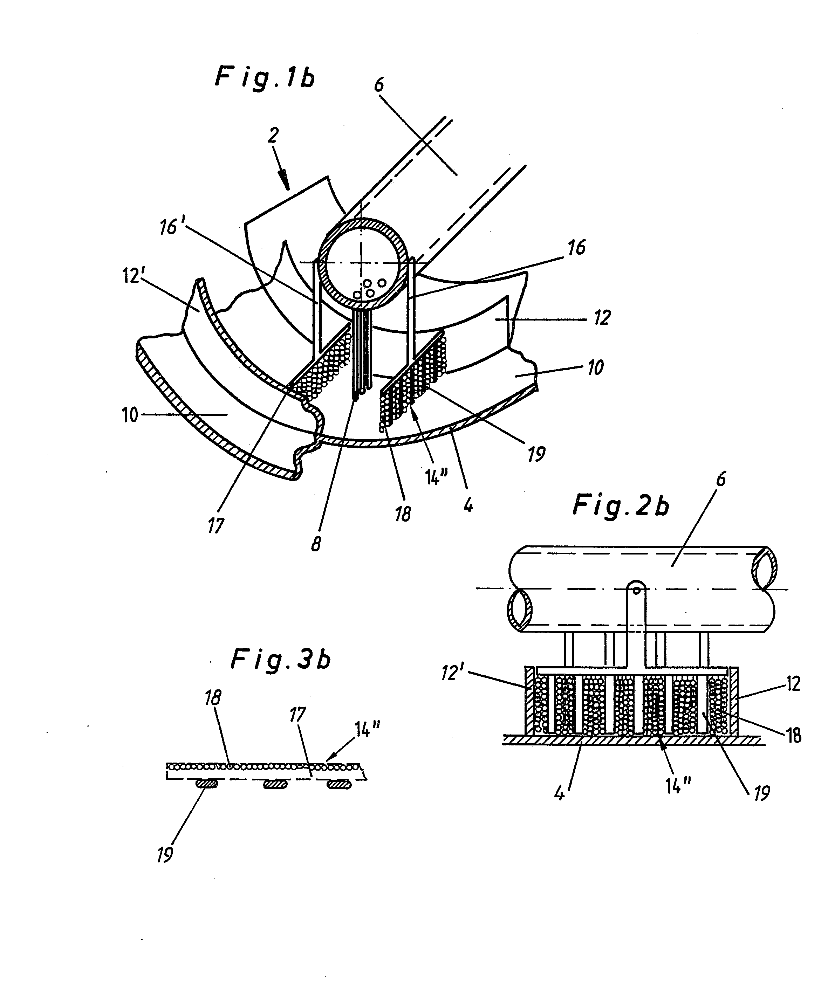

Wie in Figur 2 gezeigt, ist das Begrenzungselement 14 über ein Befestigungselement 16 mit dem Hauptrohr 6 befestigt; vorzugsweise liegt es dichtend an den Ringkammerwänden 12 bzw. 12' und an der Trommelwand 4 an.

Bei einer besonders geeigneten Ausführungsform besteht das Begrenzungselement 14 aus zwei Einzelplatten 22, 24, die an ihrer Innenkante über ein Gelenk 26 miteinander verbunden sind und durch ein Federelement 20 nach außen, d.h. in Eingriff mit den Ringkammerwänden 12 bzw. 12' gedrückt werden. Die Ausbildung der senkrechten Außenkanten der Einzelplatten 22 und 24 kann beispielsweise durch ein Federblechstreifen verbessert werden, um ein gleichmäßiges Anlegen der Einzelplatten zu ermöglichen.

Zur Eindämmung des Wirbelbettes sind innerhalb der Ringkammer 10 Begrenzungselemente 14" vorgesehen, die aus der Ringkammer ausfüllenden Ketten oder Kettengeweben 18 bestehen, die an einer Stange 17 befestigt sind, die wiederum über eine Halterung 16 bzw. 16' in ihrer Lage gehalten wird.

Wie in Figur 2a gezeigt, ist das Begrenzungselement 14" über ein Befestigungselement 16 an dem Hauptrohr 6 befestigt und liegt dichtend an den Ringkammerwänden 12 bzw. 12' und an der Trommelwand 4 an.

Bei den in Figur 3a und b gezeigten Ausführungsformen sind die miteinander verbundenen Ketten 18, zwischen denen - wie in Figur 3a gezeigt - noch Einzelketten 18' vorgesehen sein können, entweder auf beliebige Weise oder - wie in Figur 3a und 3b gezeigt - an der Vorderseite des Balkens 17 befestigt, während an der Hinterseite, also der dem Wirbelbett abgewandten Seite, senkrechte Stäbe 19 befestigt sind, die ein Aufbauschen oder Ausbeulen des Kettengewebes verhindern. Diese Stäbe 19 reichen praktisch bis zur Trommelwand, haben aber genügend Abstand zu dieser, um ein Festklemmen oder Abreißen zu vermeiden.

Patentansprüche

1. Vorrichtung zum kontinuierlichen Rösten von Kaffee in einer sich um ihre Längsachse drehenden Rösttrommel mit

a) in dieser nebeneinander angeordneten nach oben offenen Ringkammern, die durch die Innenwand der Drehtrommel und durch in Radialebenen mit Abstand zueinander angeordneten Kammerwänden begrenzt sind,

b) einem coaxial in der Rösttrommel verlaufenden Röstgas zuführenden Hauptrohr, von dessen unterem Bereich zu einem Düsenstock zusammengefaßte Röstgasdüsenrohre in einer radialen bis nahezu tangentialen Richtung in die Ringkammern zur Erzeugung eines Wirbelbettes aus den zu röstenden Kaffeebohnen hineintauchen,

0194576

c)   zwischen den einzelnen Ringkammern angeordneten vertieften Übergangsbereichen mit Leitblechen zum Weitertransport des Kaffees innerhalb der Rösttrommel von einer Ringkammer in die nächstliegende Ringkammer und

d)   einer an einem Ende der Rösttrommel angeordneten Zufuhrstation für den Röstkaffee und einer am anderen Ende der Röstkammer angeordneten Abkühl- bzw. Austragestation,

<u>dadurch gekennzeichnet</u>, daß zwischen den Ringkammerwänden (12, 12') in die Ringkammer (10, 10') hineinreichende Begrenzungselemente (14, 14') als seitliche Begrenzung des von dem jeweiligen Satz von Röstgasdüsenrohren (8) erzeugten Wirbelbettes vorgesehen sind, die an dem Röstgas zuführenden Hauptrohr (6) befestigt sind.

2.   Vorrichtung nach Anspruch 1, dadurch gekennzeichnet, daß die Begrenzungselemente (14, 14') aus zwei winkelig oder bogenförmig zueinander angeordneten Einzelplatten (22, 24) bestehen, die an ihren senkrechten Innenkanten miteinander verbunden sind und unter dem Druck eines Federelementes (20) mit ihren senkrechten Außenkanten an die Ringkammerwände (12, 12') der Ringkammer (10, 10') in Gleiteingriff angepreßt sind, wobei die vorspringende Winkelkante der das Wirbelbett begrenzende Einzelplatten (22, 24) entgegen der Laufrichtung der Drehtrommel gerichtet ist.

3.   Vorrichtung nach Anspruch 1, dadurch gekennzeichnet, daß die Begrenzungselemente (14, 14') über Befestigungselemente (16 an dem Hauptrohr 6 befestigt sind.

4.  Vorrichtung nach Anspruch 1 bis 3, dadurch gekennzeichnet, daß der Abstand zwischen den Begrenzungselementen in
    einer Ringkammer gegenüber dem in einer anderen Ringkammer unterschiedlich groß ist.

5.  Vorrichtung nach Anspruch 1, dadurch gekennzeichnet, daß
    die Begrenzungselemente in ihrem oberen Bereich nach
    innen in Richtung auf das Wirbelbett überkrängend oder um
    eine zur Rösttrommel koaxialen Achse gebogen sind.

6.  Vorrichtung nach Anspruch 1 bis 5, dadurch gekennzeichnet, daß zwichen den Begrenzungselementen ein oder zwei
    weitere im wesentlichen parallel zu den Ringkammerwänden
    verlaufende Begrenzungsplatten zur weiteren Begrenzung
    des Wirbelbettes vorgesehen sind.

7.  Vorrichtung nach Anspruch 1 bis 6, dadurch gekennzeichnet, daß an den Außenkanten der Begrenzungselemente
    jeweils eine Borstenreihe angeordnet ist, die dichtend an
    der Ringkammerwand anliegt.

8.  Vorrichtung nach Anspruch 1, dadurch gekennzeichnet,
    daß die Begrenzungselemente (14) ein oder mehrere
    Reihen von Ketten (18) sind, die teilweise oder
    vollständig in der Kettenebene miteinander verbunden
    sind und an einem waagerechten Träger (17) angebracht
    sind, der über Befestigungselemente (16) an dem Hauptrohr (6) befestigt ist.

9.  Vorrichtung nach Anspruch 8, dadurch gekennzeichnet,
    daß parallel zur Kettenebene und jenseits des Wirbelbettraumes senkrechte Stabilisierungsstäbe (19) mit
    Abstand zueinander angeordnet sind und an dem waagerechten Träger (17) befestigt sind.

*Fig.1*

*Fig. 2*

*Fig. 3*

*Fig.1a*

*Fig.2a*

*Fig.3a*

Fig.1b

Fig.2b

Fig.3b